# EUROPEAN PATENT SPECIFICATION

(11) **EP 3 225 099 B1**
(45) Date of publication and mention of the grant of the patent: **01.05.2019**
(21) Application number: 17275033.3
(22) Date of filing: 08.03.2017
(51) Int. Cl.: E01H 1/08, A47L 5/14, E01H 5/10, A01G 20/47, F04D 25/06, F04D 25/16, F04D 27/00, F04D 29/32, F04D 29/54

(54) **BLOW OPERATION DEVICE**
GEBLÄSEBETRIEBSVORRICHTUNG
DISPOSITIF D'OPÉRATION DE SOUFFLAGE

(30) Priority: 23.03.2016 JP 2016059080
(43) Date of publication of application: 04.10.2017
(73) Proprietor: Yamabiko Corporation, Ohme-shi, Tokyo 198-8760 (JP)
(72) Inventor: Haramoto, Kunihiko, Tokyo, Tokyo 1988760 (JP); Suzuki, Kenji, Tokyo, Tokyo 1988760 (JP)
(74) Representative: Wood, Graham

(56) References cited:
- EP-A1- 2 243 347
- WO-A1-2013/139371
- US-A- 6 105 206
- US-A1- 2014 115 835
- US-A1- 2015 143 657
- US-B1- 7 600 290

## Description

### TECHNICAL FIELD

The present invention relates to a blow operation device.

### BACKGROUND ART

A blow operation device is a work device that discharges compressed air generated with a blower driven by a prime mover to blow and gather fallen leaves, mown grass, or the like scattered on a street, garden. Generally known ones are a handheld type and a backpack type for an operator to perform an operation while walking. US8918956 shows an electric-motor-driven blower that is made handheld, with a battery is carried on one's back.

US6105206 discloses a blow operating device but the arrangement of the blower with respect to the frame is such that longer term operation of the device causes fatigue to the arm of the person operating the device.

### SUMMARY OF THE INVENTION

### Technical Problem

The demand trends for blow operation devices are shifting from engine-driven ones to electric-motor-driven ones, in consideration of environmental issues such as gas emission and noise pollution. An electric-motor-driven blow operation device includes, as heavy objects, a battery and an electric motor. In the technique described above, the battery is made into a backpack type, so that the burden of heavy weight upon an operation is reduced.

However, with those used to perform an operation while a battery is carried on one's back and a blower portion is held with one's hand as in the conventional technique, the blower portion including the heavy electric motor and the like is supported by one arm. Moreover, since reaction force from blowing air is applied on the arm during the operation, there is a problem in that fatigue in the arm increases as the operation progresses. Regarding an operation of blowing and gathering fallen leaves or the like by blowing air, in particular, while an efficient operation requires blowing and gathering from both right and left sides, to realize this, it is necessary for both the right and left arms to hold a blower portion, respectively, in order to blow air from two directions, which leads to a problem of the burden on the arms of an operator being further increased.

With those in which a blower portion and a battery portion are apart as in the conventional technique, there is a possibility that a cable extending from a battery up to the handheld blower portion becomes entangled, or the cable is suddenly unplugged during an operation, or the cable becomes stuck in a branch or the like, leading to the problem of deterioration in operability, possible disconnection, and the like.

Addressing such a problem is one example of an issue of the present invention. That is, the issue of the present invention includes achieving the following in a blow operation device driven by an electric motor: to reduce fatigue in the arm of an operator; to realize a blow operation of blowing and gathering compressed air from both the right and left with a small operational burden; and to prevent disconnection and improve operability by preventing a cable connecting a battery and an electric motor from being entangled, suddenly unplugged, or stuck in a branch or the like.

### Solution to Problem

In order to resolve the issue, the present invention provides a blow operation device comprising: a backpack type frame; a battery attached to the frame; a blower body having an electric motor to which power is fed from the battery and having an axial fan driven by the electric motor; and a blower tube connected to a blow side of the blower body, the blower body being supported pivotally on the frame to be rockable vertically and horizontally characterised in that a support part of the blower body with respect to the frame is provided with a rotation restriction part.

### Advantageous Effects of Invention

In such a blow operation device, the blower body with the built-in electric motor and the built-in axial fan is supported pivotally on the backpack type frame to be rockable vertically and horizontally. Therefore, fatigue in the arm of an operator can be reduced, and further the direction of the blower tube can be changed freely to perform an operation with a favorable operability. A cable connecting the battery and the electric motor can be prevented from being entangled, suddenly unplugged, or stuck in a branch or the like to prevent disconnection and improve operability.

### BRIEF DESCRIPTION OF THE DRAWINGS

FIG. 1 is a side view showing the overall configuration of a blow operation device according to an embodiment of the present invention;
FIG. 2 is an illustrative view showing the blower body of the blow operation device according to the embodiment of the present invention;
FIG. 3 is an illustrative view showing an example of a two-tube type of a blow operation device according to an embodiment of the present invention;
FIG. 4 is an illustrative view showing a locked state of the blow operation device when not in operation according to the embodiment of the present invention; and
FIGS. 5A and 5B are illustrative views showing a configuration example of a support part for a blower body and a frame in the blow operation device according to the embodiment of the present invention (FIG. 5A showing a locked state with the blower body directed upward, and FIG. 5B showing a rotation restriction state with the blower body directed downward).

### Description of Embodiments

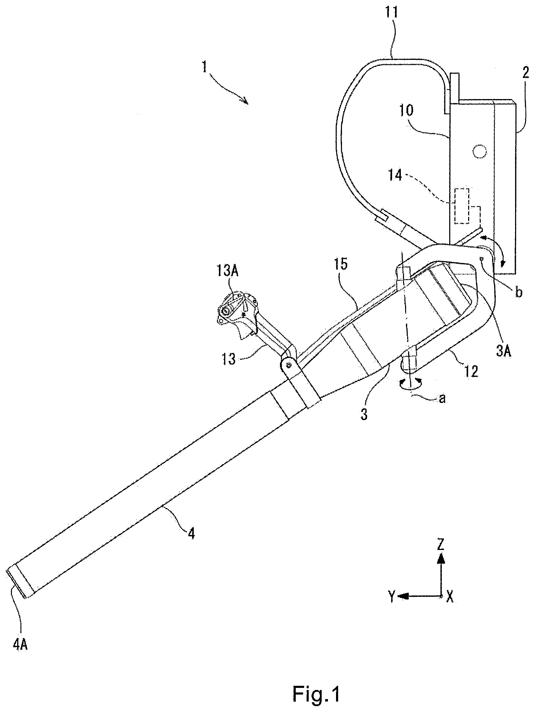

An embodiment of the present invention will be described below with reference to the drawings. As shown in FIG. 1, a blow operation device 1 includes a backpack type frame 10 to which a backpack harness 11 is attached, a battery 2 attached to the frame 10, a blower body 3, and a blower tube 4.

The blower body 3 is supported, via a support arm 12, on the frame 10 carried on the back of an operator, omitted in the drawing, to be rockably supported pivotally about each of a support axis a in the Z-axis direction shown in the drawing and a support axis b in the X-axis direction shown in the drawing. In the example shown in the drawing, the support arm 12 is supported so as to be rotatable at the lower end part of the frame 10. A support part for the blower body 3 and the frame 10 is provided at the lower end part of the frame 10.

The blower tube 4 is connected to the blow side of the blower body 3. By rocking the blower body 3 about the support axes a and b, the direction of a blowout port 4A of the blower tube 4 can be changed vertically and horizontally. The rotation of the blower body 3 about the support axes a and b is preferably restricted to a predetermined angle (e.g., 180° in the front). In the example shown in the drawing, support is along two axes. However, instead, the blower body 3 or the blower tube 4 may be rockably supported on the frame 10 by a ball-type support.

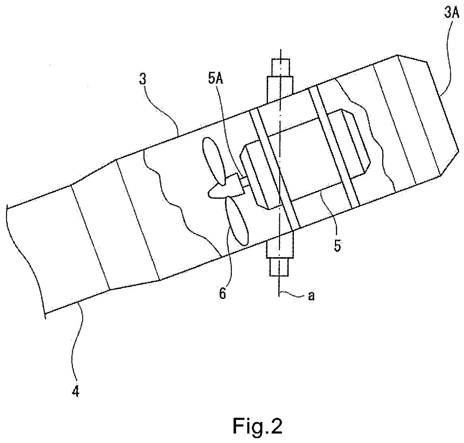

As shown in FIG. 2, the blower body 3 has an electric motor 5 and an axial fan 6 built-in. On the tip end side of the blower body 3, the blower tube 4 described above is connected. On the rear side of the blower body 3, an intake port 3A for air is provided. The electric motor 5 is connected to the battery 2 via a power supply cable omitted in the drawing. Power is fed from the battery 2 for a rotary drive.

The rotary drive of the axial fan 6 mounted to a drive shaft 5A of the electric motor 5 causes air to be sucked into the blower body 3 from the intake port 3A and sent to the blower tube 4 side. In the example shown in the drawing, the central axis of the blower body 3 and the drive shaft 5A of the electric motor 5 are coaxial. The blower body 3 and the blower tube 4 are linearly connected, such that the central axis of the blower body 3 and the central axis of the blower tube 4 are coaxial.

The blower body 3 or the blower tube 4 is provided with a grip 13 to change the blowout direction (direction of the blowout port 4A) of the blower tube 4. The grip 13 is provided with an operation input part 13A. The frame 10 is provided with a controller 14. An operation signal input by the operation input part 13A of the grip 13 is input to the controller 14 via a signal cable 15. A control signal output from the controller 14 is input to the electric motor 5 via a signal line omitted in the drawing. Accordingly, by operating the operation input part 13A, on/off and the rotating speed of the electric motor 5 can be controlled freely. In the example shown in the drawing, the controller 14 is provided to the frame 10. However, the controller 14 may be provided within the blower body 3.

An operation with such a blow operation device 1 is an operation performed while an operator is holding the grip 13 with the hand and walking, in a state where the backpack harness 11 is worn around the shoulder and the frame 10 is carried on the back. In the blow operation device 1, the blower body 3 and the blower tube 4 are supported on the frame 10 via the support arm 12 such that the blowout port 4A of the blower tube 4 is directed obliquely downward, in a state where the frame 10 is carried on the back of the operator. The operator changes the direction of the blowout port 4A as appropriate to perform blowing and gathering in a desired direction, by operating the grip 13 vertically and horizontally.

With such a blow operation device 1, in a similar manner to the conventional technique, the battery 2 that is a heavy object is supported on the backpack type frame 10, and the blower body 3 and the blower tube 4 are supported on the frame 10. Therefore, an operation can be performed in a state where the burden of heavy weight on the arm is reduced sufficiently. Further, the structure of the blower body 3 is such that the electric motor 5 and the axial fan 6 are combined. Therefore, compared to a centrifugal fan type with a direct-coupled engine, the size and weight of the blower portion and the whole can be reduced significantly.

By the blower body 3 and the blower tube 4 being supported on the frame 10, the reaction force of blowing air during an operation is mostly received with the whole body of an operator via the frame 10. Therefore, fatigue in the arm during an operation can be reduced sufficiently.

During an operation, the grip 13 is operated to perform the operation while changing the direction of the blowout port 4A. Since the weight of the blower body 3 and the blower tube 4 is supported by the frame 10, the direction of the blowout port 4A can be changed with a light operation, and a comfortable operation can be performed stably.

Since the blower body 3 and the blower tube 4 are linearly connected such that the central axis of the blower body 3 and the blower tube 4 and the drive axis of the electric motor 5 and the axial fan 6 are coaxially arranged, air that has been sucked into the blower body 3 from the intake port 3A can be sent to the blower tube 4 and sent out from the blowout port 4A with minimum loss within the tube. Accordingly, a large air flow can be obtained with relatively small power, and an operation with small energy consumption can be performed. Therefore, consumption of the battery 2 can be suppressed, and a long operation can be performed with the small battery 2.

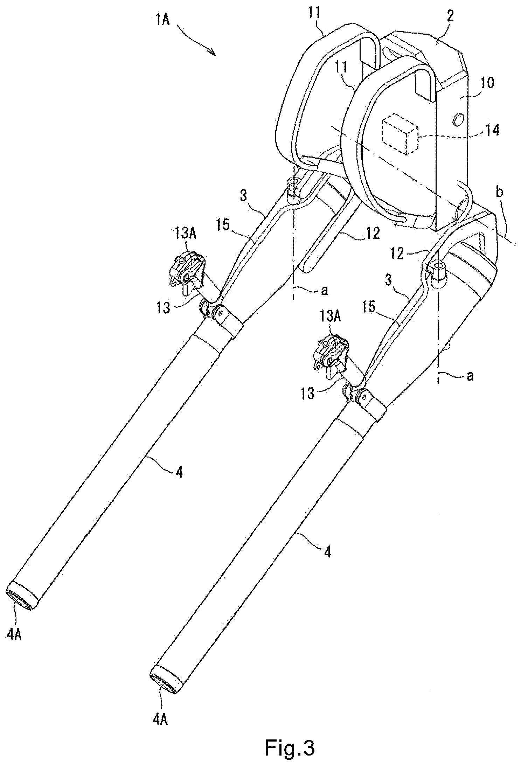

A blow operation device 1A shown in FIG. 3 is an example of a two-tube type in which pairs of the blower bodies 3 and the blower tubes 4 are provided to the frame 10 on the right and left. The structure of the pairs of the blower bodies 3 and the blower tubes 4 are as shown in each of FIGS. 1 and 2. Each blower body 3 or blower tube 4 is supported, via the support arm 12, to the frame 10 to be rockable vertically and horizontally.

The blower bodies 3 or blower tubes 4 on the right and left are respectively mounted with the grips 13. An operator holds the grip 13 on the right side with the right hand and holds the grip 13 on the left side with the left hand to perform a blowing-and-gathering operation while freely changing the direction of the blowout ports 4A on the right and left.

The grip 13 on the right and left are each provided with the operation input part 13A. By operating the respective operation input parts 13A, the rotating speeds of the electric motors 5 within the right and left blower bodies 3 can each be controlled independently. The controller 14 may be provided separately to each blower body 3 or may be provided to the frame 10 such that each electric motor 5 can be controlled separately.

In the case of blowing fallen leaves or the like with the blower tube 4 of a one-tube type, the fallen leaves or the like are spread to the right and left from the center of an air flow, and an operator has to move to the right and left over and over to blow and gather the spread fallen leaves or the like. However, with the employment of the blower tube 4 of a two-tube type in such a blow operation device 1A, the spreading of fallen leaves or the like can be suppressed by causing air flows to be blown simultaneously toward the center from the right and left, and the operational efficiency of a blowing-and-gathering operation can be improved significantly. The right and left blower bodies 3 allow for independent output adjustments, and therefore increasing the efficiency of an operation and power saving are possible through the adjustment in accordance with the environment or situation of the operation.

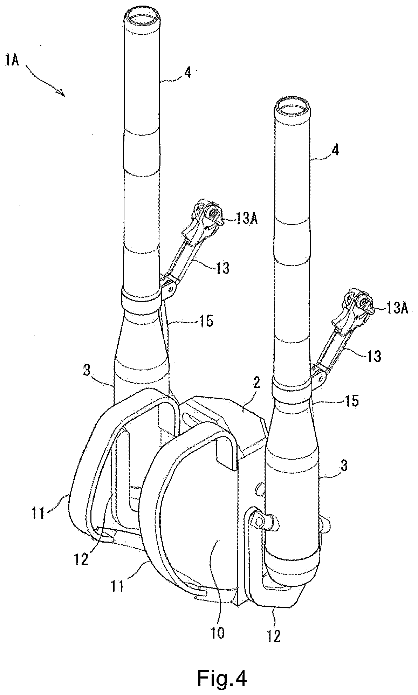

Since the right and left blower bodies 3 and blower tubes 4 are supported on the frame 10, the burden on both arms is made small even in the case of performing a blowing-and-gathering operation with a two-tube type, and the right and left grip 13 can be operated as appropriate to proceed smoothly with the operation. Further, when not in operation, including upon moving, a mechanism provided as shown in FIG. 4 to lock the blower body 3 and the blower tube 4 in a direction towards a predetermined position (e.g., upward as in the drawing) allows for both hands to be apart from the grip 13. Therefore, it is possible to perform a sweeping operation with a broom after blowing and gathering of fallen leaves or the like, with the blow operation device 1A carried on one's back. By providing a lock mechanism described above, the blow operation device 1A can be accommodated in a small space upon storage.

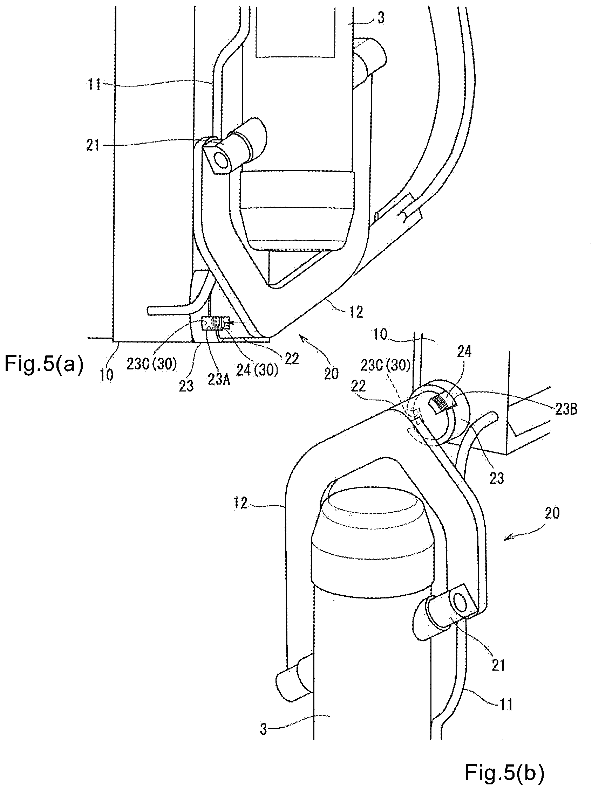

FIGS. 5A and 5B show one example of a support part 20 for the blower body 3 and the frame 10. The support part 20 supports pivotally the blower body 3 and the frame 10 via the support arm 12 described above with two shafts (rotating shafts 21 and 22). Herein, the blower body 3 and the support arm 12 are supported pivotally by the rotating shaft 21, and the support arm 12 and the frame 10 are supported pivotally by the rotating shaft 22.

The rotating shaft 22 and a bearing 23 are provided with rotation restriction parts 23A and 23B. By causing a stopper and lock member 24 to contact the rotation restriction parts 23A and 23B, the rotation about the bearing 23 of the rotating shaft 22 is restricted to a range of 180°. Accordingly, the pivotal support of the blower body 3 with respect to the frame 10 restricts the rotation to a range of 180° in the front, preventing the blower body 3 from rocking excessively with respect to the frame 10, in the case where the grip 13 has been let loose or the like, or a cable from being entangled with the support arm 12 or the like.

The bearing 23 of the rotating shaft 22 is provided with a lock groove 23C. The lock groove 23C and the stopper and lock member 24 constitute a lock mechanism 30. The lock mechanism 30 locks the rotation with respect to the bearing 23 of the rotating shaft 22 by fitting the stopper and lock member 24 into the lock groove 23C. In the example shown in the drawing, the lock mechanism 30 locks the blower body 3 in an upward direction.

As described above, the blow operation devices 1 and 1A according to the embodiments of the present invention can reduce fatigue in the arm of an operator. Further, the direction of the blower tube 4 can be changed freely to perform an operation with a favorable operability. In the embodiments described above, the support arm 12 can be made detachable with respect to the frame 10. In this case, selection of a one-tube type or a two-tube type and, in the case of a one-tube type, selection of one of right and left positions in the frame 10 as a connecting position for the support arm 12 may be allowed to allow for both right-handed use and left-handed use.

The embodiments of the present invention have been described above in detail with reference to the drawings. The specific configuration is not limited to these embodiments and may be changed within the limitations as provided by the appended claims.

### EXPLANATION OF REFERENCE NUMERALS

1, 1A Blow operation device
2 Battery
3 Blower body
3A Intake port
4 Blower tube
4A Blowout port
5 Electric motor
6 Axial fan
10 Frame
11 Backpack harness
12 Support arm
13 Grip
13A Operation input part
14 Controller
15 Signal cable
20 Support part
21, 22 Rotating shaft
23 Bearing
23A, 23B Rotation restriction part
23C Lock groove
24 Stopper and lock member
30 Lock mechanism

## Claims

1. A blow operation device (1) comprising:
a backpack type frame (10);
a battery (2) attached to the frame (10);
a blower body (3) having an electric motor (5) to which power is fed from the battery (2) and having an axial fan (6) driven by the electric motor (5); and
a blower tube (4) connected to a blow side of the blower body (3),
**characterised in** the blower body (3) being supported pivotally on the frame (10) to be rockable vertically and horizontally, wherein a support part (20) of the blower body (3) with respect to the frame (10) is provided with a rotation restriction part (23A, 23B).

2. The blow operation device (1) according to claim 1, **characterised in that** the support part (20) for the blower body (3) and the frame (10) is provided with a lock mechanism (30) to lock the blower body (3) in a direction towards a predetermined position.

3. The blow operation device (1) according to claim 2, **characterised in that** the lock mechanism (30) locks the blower body (3) in an upward direction.

4. The blow operation device (1) according to any one of claims 1 to 3, **characterised in that** the support part (20) for the blower body (3) and the frame (10) is provided at a lower end part of the frame (10).

5. The blow operation device (1) according to claim 1, **characterised in that** the rotation restriction part (23A, 23B) restricts rotation of the blower body (3) to a range of 180° in a front.

6. The blow operation device (1) according to any one of claims 1 to 5, **characterised in that** the blower body (3) and the blower tube (4) are linearly connected.

7. The blow operation device (1) according to any one of claims 1 to 6, **characterised in that** the blower body (3) or the blower tube (4) is provided with a grip (13) to change a blowout direction of the blower tube (4).

8. The blow operation device (1) according to claim 7, **characterised in that** the frame (10) or the blower body (3) is provided with a controller (14) to control rotation of the electric motor (5), and the grip (13) is provided with an operation input part (13A) to input an operation signal to the controller (14).

9. The blow operation device (1) according to any one of claims 1 to 8, **characterised in that** a pair of the blower bodies (3) is provided on right and left of the frame (10).

## Patentansprüche

1. Gebläsebetriebsvorrichtung (1), die aufweist:
einen Rahmen vom Rücksacktyp (10);
eine an dem Rahmen (10) angebrachte Batterie (2);
einen Gebläsekörper (3), der einen Elektromotor (5) hat, der von der Batterie (2) mit Energie gespeist wird und ein von dem Elektromotor (5) angetriebenes Axialgebläse (6) hat; und
ein Gebläserohr (4) das mit einer Blasseite des Gebläsekörpers (3) verbunden ist,
**dadurch gekennzeichnet, dass**
der Gebläsekörper (3) schwenkbar am Rahmen (10) gelagert ist, um vertikal und horizontal geschaukelt werden zu können, wobei ein Trägerteil (20) des Gebläsekörpers (3) in Bezug auf den Rahmen (10) mit einem Drehbeschränkungsteil (23A, 23B) versehen ist.

2. Gebläsebetriebsvorrichtung (1) nach Anspruch 1, **dadurch gekennzeichnet, dass** der Trägerteil (20) für den Gebläsekörper (3) und den Rahmen (10) mit einem Arretierungsmechanismus (30) zum Arretieren des Gebläsekörpers (3) in Richtung auf eine vorbestimmte Stellung versehen ist.

3. Gebläsebetriebsvorrichtung (1) nach Anspruch 2, **dadurch gekennzeichnet, dass** der Arretierungsmechanismus (30) den Gebläsekörper (3) in einer Aufwärtsrichtung arretiert.

4. Gebläsebetriebsvorrichtung (1) nach einem der Ansprüche 1 bis 3, **dadurch gekennzeichnet, dass** der Trägerteil (20) für den Gebläsekörper (3) und den Rahmen (10) an einem unteren Endteil des Rahmens (10) bereitgestellt ist.

5. Gebläsebetriebsvorrichtung (1) nach Anspruch 1, **dadurch gekennzeichnet, dass** der Drehbeschränkungsteil (23A, 23B) die Drehung des Gebläsekörpers (3) auf einen Bereich von 180° vorn beschränkt.

6. Gebläsebetriebsvorrichtung (1) nach einem der Ansprüche 1 bis 5, **dadurch gekennzeichnet, dass** der Gebläsekörper (3) und das Gebläserohr (4) linear verbunden sind.

7. Gebläsebetriebsvorrichtung (1) nach einem der Ansprüche 1 bis 6, **dadurch gekennzeichnet, dass** der Gebläsekörper (3) oder das Gebläserohr (4) mit einem Griff (13) zum Ändern einer Ausblaserichtung des Gebläserohrs (4) versehen ist.

8. Gebläsebetriebsvorrichtung (1) nach Anspruch 7, **dadurch gekennzeichnet, dass** der Rahmen (10) oder der Gebläsekörper (3) mit einer Steuerung (14) zum Steuern der Drehung des Elektromotors (5) versehen ist und der Griff (13) mit einem Bedienungseingabeteil (13A) zum Eingeben eines Bediensignals in die Steuerung versehen ist.

9. Gebläsebetriebsvorrichtung (1) nach einem der Ansprüche 1 bis 8, **dadurch gekennzeichnet, dass** ein Paar der Gebläsekörper (3) rechts bzw. links am Rahmen (10) bereitgestellt ist.

## Revendications

1. Dispositif d'opération de soufflage (1) comprenant :
un cadre de type à porter sur le dos (10) ;
une batterie (2) attachée au cadre (10) ;
un corps de souffleur (3) ayant un moteur électrique (5) auquel est fournie une alimentation à partir de la batterie (2) et chacun ayant un ventilateur axial (6) entraîné par le moteur électrique (5) ; et
un tube de souffleur (4) raccordé à un côté soufflage du corps de souffleur (3), caractérisé en
le corps de souffleur (3) étant soutenu de manière pivotante sur le cadre (10) pour être apte à basculer verticalement et horizontalement, dans lequel une partie de support (2) du corps de souffleur (3) par rapport au cadre (10) est pourvue d'une partie de restriction de rotation (23A, 23B).

2. Dispositif d'opération de soufflage (1) selon la revendication 1, **caractérisé en ce que** la partie de support (20) pour le corps de souffleur (3) et le cadre (10) est pourvue d'un mécanisme de verrouillage (30) pour verrouiller le corps de souffleur (3) dans une direction vers une position prédéterminée.

3. Dispositif d'opération de soufflage (1) selon la revendication 2, **caractérisé en ce que** le mécanisme de verrouillage (30) verrouille le corps de souffleur (3) dans une direction vers le haut.

4. Dispositif d'opération de soufflage (1) selon l'une quelconque des revendications 1 à 3, **caractérisé en ce que** la partie de support (20) pour le corps de souffleur (3) et le cadre (10) est prévue au niveau d'une partie d'extrémité inférieure du cadre (10).

5. Dispositif d'opération de soufflage (1) selon la revendication 1, **caractérisé en ce que** la partie de restriction de rotation (23A, 23B) restreint une rotation du corps de souffleur (3) à une gamme de 180° dans une face avant.

6. Dispositif d'opération de soufflage (1) selon l'une quelconque des revendications 1 à 5, **caractérisé en ce que** le corps de souffleur (3) et le tube de souffleur (4) sont raccordés de manière linéaire.

7. Dispositif d'opération de soufflage (1) selon l'une quelconque des revendications 1 à 6, **caractérisé en ce que** le corps de souffleur (3) ou le tube de souffleur (4) est pourvu d'une poignée (13) qui change une direction de soufflage vers l'extérieur du tube de souffleur (4).

8. Dispositif d'opération de soufflage (1) selon la revendication 7, **caractérisé en ce que** le cadre (10) ou le corps de souffleur (3) est pourvu d'un dispositif de commande (14) pour commander une rotation du moteur électrique (5), et la poignée (13) est pourvue d'une partie d'entrée d'opération (13A) pour introduire un signal d'opération sur le dispositif de commande (14).

9. Dispositif d'opération de soufflage (1) selon l'une quelconque des revendications 1 à 8, **caractérisé en ce qu'**une paire des corps de souffleur (3) est prévue sur la droite et la gauche du cadre (10).
